# EUROPEAN PATENT APPLICATION

(11) **EP 4 694 065 A1**
(43) Date of publication of application: **11.02.2026**
(21) Application number: 24796210.3
(22) Date of filing: 26.04.2024
(51) Int. Cl.: H04L 41/16

(54) **NETWORK MANAGEMENT METHOD, APPARATUS AND SYSTEM, AND STORAGE MEDIUM**

(30) Priority: 28.04.2023 CN 202310482962
(71) Applicant: Huawei Technologies Co., Ltd., Shenzhen, Guangdong 518129 (CN)
(72) Inventor: CHEN, Guoyu, Shenzhen, Guangdong 518129 (CN); SI, Xin, Shenzhen, Guangdong 518129 (CN)
(74) Representative: Isarpatent
(86) International application number: PCT/CN2024/089952
(87) International publication number: WO 2024/222836

(57) **Abstract**

This application discloses a network management method, apparatus, and system, and a storage medium. The method includes: receiving first request information, where the first request information is used to request whether to perform a management operation on a first subordinate closed-loop control process set of a closed-loop control process in addition to performing the management operation on the closed-loop control process, and the closed-loop control process is used to manage a network entity or a network service; and performing the management operation based on the first request information. According to the solution of this application, the first request information is not only used to request to perform the management operation on the closed-loop control process, but also indicates whether to perform the management operation on the first subordinate closed-loop control process set of the closed-loop control process, so that a plurality of closed-loop control processes can be managed, thereby improving management efficiency of the closed-loop control processes.

## Description

This application claims priority to Chinese Patent Application No. 202310482962.4, filed with the China National Intellectual Property Administration on April 28, 2023 and entitled "NETWORK MANAGEMENT METHOD, APPARATUS, AND SYSTEM, AND STORAGE MEDIUM", which is incorporated herein by reference in its entirety.

### TECHNICAL FIELD

This application relates to the field of communication technologies, and in particular, to a network management method, apparatus, and system, and a storage medium.

### BACKGROUND

To implement automatic network management and reduce human participation in system operations, people establish a closed-loop control process for continuously monitoring and evaluating network performance, and automatically adjusting a network to achieve a specified objective, that is, when the specified objective is not achieved, a corrective measure is taken in the closed-loop control process. The closed-loop control process is a computer process that is run on a network management service provider entity, to control the network. The closed-loop control process may be logically divided into a variable quantity of levels, and each level is responsible for performing a part of functions of the closed-loop control process. In this way, in a network management system, there are many closed-loop control processes that have different sizes, functions, and permissions but are associated with each other. There is a hierarchical relationship between the closed-loop control processes. A superior closed-loop control process has the right to manage a subordinate closed-loop control process.

Existing closed-loop control process management is performed for a single closed-loop control process. Consequently, efficiency is low, and diversified management requirements of the network management service provider entity on the closed-loop control processes cannot be met. How to improve a management mode of the closed-loop control processes is a technical problem to be resolved.

### SUMMARY

This application provides a network management method, apparatus, and system, and a storage medium, to improve a management mode of closed-loop control processes, thereby improving management efficiency.

According to a first aspect, a network management method is provided. The method includes: receiving first request information, where the first request information is used to request whether to perform a management operation on a first subordinate closed-loop control process set of a closed-loop control process in addition to performing the management operation on the closed-loop control process, and the closed-loop control process is used to manage a network entity or a network service; and performing the management operation based on the first request information.

In this aspect, the first request information is not only used to request to perform the management operation on the closed-loop control process, but also indicates whether to perform the management operation on the first subordinate closed-loop control process set of the closed-loop control process, so that a plurality of closed-loop control processes can be managed, thereby improving management efficiency of the closed-loop control processes.

In a possible implementation, the management operation is a pause operation, a stop operation, a resume operation, or an operation of obtaining pause point information.

In another possible implementation, when the first request information is used to request to perform the management operation on the first subordinate closed-loop control process set in addition to performing the management operation on the closed-loop control process, performing the management operation based on the first request information includes: performing the management operation on the closed-loop control process, and triggering the management operation to be performed on the first subordinate closed-loop control process set; or when the first request information is used to request not to perform the management operation on the first subordinate closed-loop control process set except for performing the management operation on the closed-loop control process, performing the management operation based on the first request information includes: performing the management operation on the closed-loop control process, but not triggering the management operation to be performed on the first subordinate closed-loop control process set.

In this implementation, based on the first request information, the management operation may be triggered to be performed on the first subordinate closed-loop control process set, or the management operation may not be triggered to be performed on the first subordinate closed-loop control process set. This improves flexibility of a management mode of the closed-loop control processes.

In another possible implementation, when the first request information is used to request to perform the management operation on the first subordinate closed-loop control process set in addition to performing the management operation on the closed-loop control process, the first request information includes range information, and the range information is used to determine the first subordinate closed-loop control process set.

In this implementation, it is not to agree to uniformly perform the management operation or uniformly perform no management operation on all subordinate closed-loop control processes of the closed-loop control process. Instead, a first subordinate closed-loop control process on which the management operation needs to be performed is determined by using the range information. This further improves the flexibility of the management mode of the closed-loop control processes.

In another possible implementation, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all the subordinate closed-loop control processes of the closed-loop control process.

In this implementation, based on actual situations, different range information is used to represent first subordinate closed-loop control process sets of different ranges, to effectively reduce a resource waste.

In another possible implementation, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

In another possible implementation, before receiving the first request information, the method further includes: receiving third request information, where the third request information is used to request to obtain the pause point information.

In another possible implementation, the first subordinate closed-loop control process set includes a second subordinate closed-loop control process set directly managed by a first network management service provider entity, and triggering the management operation to be performed on the first subordinate closed-loop control process set includes: The first network management service provider entity performs the management operation on the second subordinate closed-loop control process set. Alternatively, the first subordinate closed-loop control process set includes a third subordinate closed-loop control process set directly managed by a second network management service provider entity, and triggering the management operation to be performed on the subordinate closed-loop control process of the closed-loop control process includes: sending second request information to the second network management service provider entity, where the second request information is used to request the second network management service provider entity to perform the management operation on the third subordinate closed-loop control process set.

In this implementation, the management operation is performed on the second subordinate closed-loop control process set that is in the first subordinate closed-loop control process set and that is managed by the first network management service provider entity, and/or the second request information is sent to the second network management service provider entity that manages the third subordinate closed-loop control process set in the first subordinate closed-loop control process set, so that a management capability and a coordination capability of the management mode of the closed-loop control processes can be improved.

In another possible implementation, the method further includes: obtaining or receiving an execution result of the management operation.

In another possible implementation, the method further includes: outputting or sending the execution result of the management operation.

According to a second aspect, a network management method is provided. The method includes: sending first request information, where the first request information is used to request whether to perform a management operation on a first subordinate closed-loop control process set of a closed-loop control process in addition to performing the management operation on the closed-loop control process, and the closed-loop control process is used to manage a network entity or a network service; and receiving an execution result of the management operation.

In a possible implementation, the management operation is a pause operation, a stop operation, a resume operation, or an operation of obtaining pause point information.

In another possible implementation, the first request information includes range information, and the range information is used to determine the first subordinate closed-loop control process set.

In another possible implementation, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

In another possible implementation, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

In another possible implementation, before sending the first request information, the method further includes: sending third request information, where the third request information is used to request to obtain the pause point information.

According to a third aspect, a network management method is provided. The method includes: sending first request information, where the first request information is used to request whether to perform a management operation on a first subordinate closed-loop control process set of a closed-loop control process in addition to performing the management operation on the closed-loop control process, and the closed-loop control process is used to manage a network entity or a network service; receiving the first request information; and performing the management operation based on the first request information.

In a possible implementation, the management operation is a pause operation, a stop operation, a resume operation, or an operation of obtaining pause point information.

In another possible implementation, when the first request information is used to request to perform the management operation on the first subordinate closed-loop control process set in addition to performing the management operation on the closed-loop control process, performing the management operation based on the first request information includes: performing the management operation on the closed-loop control process, and triggering the management operation to be performed on the first subordinate closed-loop control process set; or when the first request information is used to request not to perform the management operation on the first subordinate closed-loop control process set except for performing the management operation on the closed-loop control process, performing the management operation based on the first request information includes: performing the management operation on the closed-loop control process, but not triggering the management operation to be performed on the first subordinate closed-loop control process set.

In another possible implementation, when the first request information is used to request to perform the management operation on the first subordinate closed-loop control process set in addition to performing the management operation on the closed-loop control process, the first request information includes range information, and the range information is used to determine the first subordinate closed-loop control process set.

In another possible implementation, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

In another possible implementation, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

In another possible implementation, before sending the first request information, the method further includes: sending third request information, where the third request information is used to request to obtain the pause point information; and receiving the third request information.

In another possible implementation, the first subordinate closed-loop control process set includes a second subordinate closed-loop control process set directly managed by a first network management service provider entity, and triggering the management operation to be performed on the first subordinate closed-loop control process set includes: The first network management service provider entity performs the management operation on the second subordinate closed-loop control process set. Alternatively, the first subordinate closed-loop control process set includes a third subordinate closed-loop control process set directly managed by a second network management service provider entity, and triggering the management operation to be performed on the subordinate closed-loop control process of the closed-loop control process includes: sending second request information to the second network management service provider entity, where the second request information is used to request the second network management service provider entity to perform the management operation on the third subordinate closed-loop control process set.

In another possible implementation, an execution result of the management operation is obtained or received.

In another possible implementation, the execution result of the management operation is output or sent.

According to a fourth aspect, a network management apparatus is provided, and can implement the network management method in the first aspect. For example, the network management apparatus may be a chip or a network management service provider entity. The foregoing method may be implemented by software, hardware, or hardware executing corresponding software.

In a possible implementation, the apparatus includes a transceiver module and a processing module. The transceiver module is configured to receive first request information, where the first request information is used to request whether to perform a management operation on a first subordinate closed-loop control process set of a closed-loop control process in addition to performing the management operation on the closed-loop control process, and the closed-loop control process is used to manage a network entity or a network service. The processing module is configured to perform the management operation based on the first request information.

Optionally, the management operation is a pause operation, a stop operation, a resume operation, or an operation of obtaining pause point information.

Optionally, when the first request information is used to request to perform the management operation on the first subordinate closed-loop control process set in addition to performing the management operation on the closed-loop control process, the processing module is further configured to: perform the management operation on the closed-loop control process, and trigger the management operation to be performed on the first subordinate closed-loop control process set; or when the first request information is used to request not to perform the management operation on the first subordinate closed-loop control process set except for performing the management operation on the closed-loop control process, the processing module is further configured to: perform the management operation on the closed-loop control process, but not trigger the management operation to be performed on the first subordinate closed-loop control process set.

Optionally, when the first request information is used to request to perform the management operation on the first subordinate closed-loop control process set in addition to performing the management operation on the closed-loop control process, the first request information includes range information, and the range information is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the transceiver module is further configured to receive third request information, where the third request information is used to request to obtain the pause point information.

Optionally, the first subordinate closed-loop control process set includes a second subordinate closed-loop control process set directly managed by a first network management service provider entity, and the processing module is further configured to perform the management operation on the second subordinate closed-loop control process set. Alternatively, the first subordinate closed-loop control process set includes a third subordinate closed-loop control process set directly managed by a second network management service provider entity, and the transceiver module is further configured to send second request information to the second network management service provider entity, where the second request information is used to request the second network management service provider entity to perform the management operation on the third subordinate closed-loop control process set.

Optionally, the transceiver module is further configured to obtain or receive an execution result of the management operation.

Optionally, the transceiver module is further configured to output or send the execution result of the management operation.

According to a fifth aspect, a network management apparatus is provided, and can implement the network management method in the second aspect. For example, the network management apparatus may be a chip or a network management service consumer entity. The foregoing method may be implemented by software, hardware, or hardware executing corresponding software.

In a possible implementation, the apparatus includes a sending module and a receiving module. The sending module is configured to send first request information, where the first request information is used to request whether to perform a management operation on a first subordinate closed-loop control process set of a closed-loop control process in addition to performing the management operation on the closed-loop control process, and the closed-loop control process is used to manage a network entity or a network service. In addition, the receiving module is configured to receive an execution result of the management operation.

Optionally, the management operation is a pause operation, a stop operation, a resume operation, or an operation of obtaining pause point information.

Optionally, the first request information includes range information, and the range information is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the sending module is further configured to send third request information, where the third request information is used to request to obtain the pause point information.

With reference to the fourth aspect, the fifth aspect, or either of the fourth aspect and the fifth aspect, in another possible implementation, the network management apparatus in the fourth aspect, the fifth aspect, or either of the fourth aspect and the fifth aspect includes a processor coupled to a memory. The processor is configured to support the apparatus in performing a corresponding function in the foregoing network management method. The memory is configured to be coupled to the processor, and stores a program (instructions) and/or data necessary for the apparatus. Optionally, the network management apparatus may further include a communication interface, configured to support the apparatus in communicating with another network element. Optionally, the memory may be located inside the network management apparatus, or may be located outside the network management apparatus.

With reference to the fourth aspect, the fifth aspect, or either of the fourth aspect and the fifth aspect, in another possible implementation, the network management apparatus in the fourth aspect, the fifth aspect, or either of the fourth aspect and the fifth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the network management apparatus and transmit the signal to the processor, or send a signal from the processor to an apparatus other than the network management apparatus. When the network management apparatus is a chip, the transceiver apparatus is the transceiver circuit or the input/output interface.

When the network management apparatus in the fourth aspect, the fifth aspect, or either of the fourth aspect and the fifth aspect is a chip or a chip module, the sending module may be an output module, for example, an output circuit or a communication interface, and the receiving module may be an input module, for example, an input circuit or a communication interface. When the network management apparatus is a terminal or an access network device, the sending module may be a transmitter or a transmitter machine, and the receiving module may be a receiver or a receiver machine.

According to a sixth aspect, a network management system is provided. The system includes a first network management apparatus (first network management service provider entity) and a second network management apparatus (network management service consumer entity). The network management service consumer entity is configured to send first request information to the first network management service provider entity, where the first request information is used to request whether to perform a management operation on a first subordinate closed-loop control process set of a closed-loop control process in addition to performing the management operation on the closed-loop control process, and the closed-loop control process is used to manage a network entity or a network service. In addition, the first network management service provider entity is configured to perform the management operation based on the first request information.

Optionally, the management operation is a pause operation, a stop operation, a resume operation, or an operation of obtaining pause point information.

Optionally, when the first request information is used to request to perform the management operation on the first subordinate closed-loop control process set in addition to performing the management operation on the closed-loop control process, the first network management service provider entity is further configured to: perform the management operation on the closed-loop control process, and trigger the management operation to be performed on the first subordinate closed-loop control process set; or when the first request information is used to request the first network management service provider entity not to perform the management operation on the first subordinate closed-loop control process set except for performing the management operation on the closed-loop control process, the first network management service provider entity is further configured to: perform the management operation on the closed-loop control process, but not trigger the management operation to be performed on the first subordinate closed-loop control process set.

Optionally, when the first request information is used to request to perform the management operation on the first subordinate closed-loop control process set in addition to performing the management operation on the closed-loop control process, the first request information includes range information, and the range information is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the network management service consumer entity is configured to send third request information, where the third request information is used to request to obtain the pause point information.

Optionally, the first subordinate closed-loop control process set includes a second subordinate closed-loop control process set directly managed by the first network management service provider entity, and the first network management service provider entity is further configured to perform the management operation on the second subordinate closed-loop control process set. Alternatively, the first subordinate closed-loop control process set includes a third subordinate closed-loop control process set directly managed by a second network management service provider entity, and the first network management service provider entity is further configured to send second request information to the second network management service provider entity, where the second request information is used to request the second network management service provider entity to perform the management operation on the third subordinate closed-loop control process set.

Optionally, the first network management service provider entity is further configured to obtain or receive an execution result that is of the management operation and that is sent by the second network management service provider entity.

Optionally, the first network management service provider entity is further configured to output or send the execution result of the management operation to the network management service consumer entity.

According to a seventh aspect, a computer-readable storage medium is provided. The computer-readable storage medium stores a computer program or instructions, and when a computer executes the computer program or the instructions, the methods in the foregoing aspects are implemented.

According to an eighth aspect, a computer program product including instructions is provided. When the instructions are run on a network management apparatus, the network management apparatus is caused to perform the methods in the foregoing aspects.

### BRIEF DESCRIPTION OF DRAWINGS

FIG. 1 is a diagram of a closed-loop control process according to an embodiment of this application;
FIG. 2 is a diagram of a structure of a network management system according to an embodiment of this application;
FIG. 3 is a schematic flowchart of a network management method according to an embodiment of this application;
FIG. 4 is a diagram of a relationship between closed-loop control processes according to an embodiment of this application;
FIG. 5 is a diagram of a structure of a network management apparatus according to an embodiment of this application;
FIG. 6 is a diagram of a structure of another network management apparatus according to an embodiment of this application; and
FIG. 7 is a diagram of a structure of still another network management apparatus according to an embodiment of this application.

### DESCRIPTION OF EMBODIMENTS

The following describes embodiments of this application with reference to the accompanying drawings in embodiments of this application.

A closed-loop control process may also be referred to as a closed loop, a closed-loop control program, closed-loop control, a closed-loop control process, or the like. The closed-loop control process is a computer process, thread, program, or the like that is run on a network management service provider entity, to control a network. Each closed-loop control process includes a set of stages obtained through division of workflow processes, to achieve control objectives. Each closed-loop control process may be divided into a variable quantity of stages, and each stage is responsible for performing a part of functions of the closed-loop control process. Each stage of one closed-loop control process may include one or more sub-closed loops. These sub-closed loops are dependent (nested) on each other and are displayed to an external management entity as a single entity, for example, a single closed loop. In other words, one or more stages forming one closed-loop control process may also be a closed-loop control process. Refer to a closed-loop concept defined by the European Telecommunications Standards Institute (ETSI, European Telecommunications Standards Institute) group specification (GS, Group Specification) zero-touch network and service management (ZSM, Zero-touch network and Service Management) 009-1 [i.11]. The closed loop is based on monitoring, analysis, decision-making, execution, and a knowledge management service.

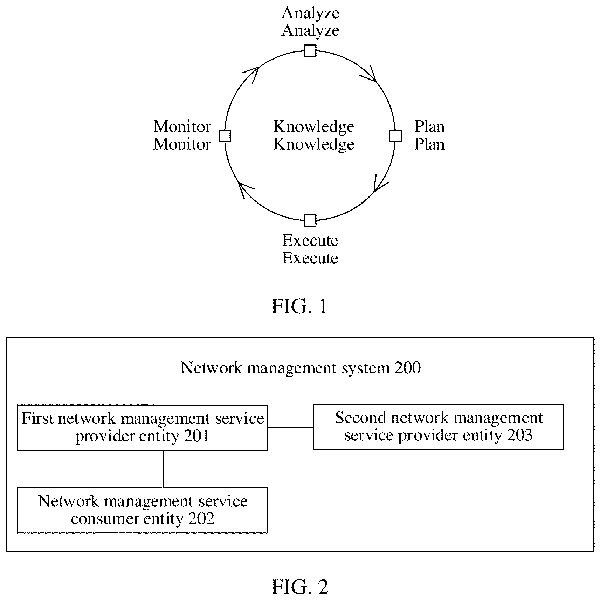

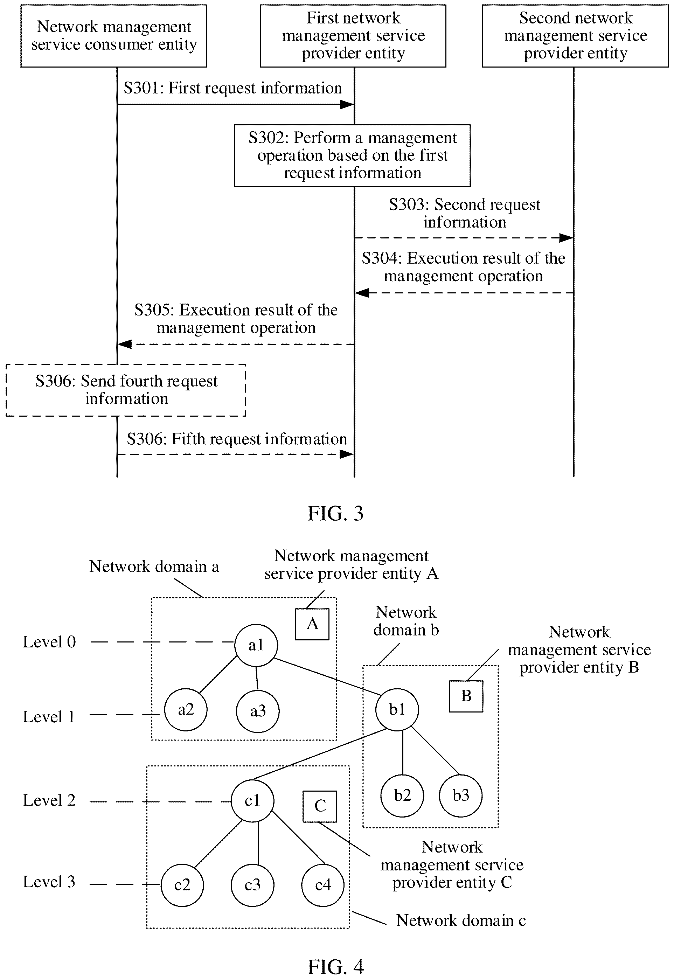

FIG. 1 is a diagram of a closed-loop control process according to an embodiment of this application. The diagram shows a closed-loop control process referred to as a MAPE-K loop. The MAPE-K loop includes four modules: monitoring (Monitor), analysis (Analyze), planning (Plan), and execution (Execute). These modules can share a knowledge base (Knowledge base). The MAPE-K loop is a kind of control structure with cyclic feedback, and can possess, basically without human intervention, self-perception, self-analysis, self-regulation, and other abilities of managing a technology by using a technology. When applied to the network management field, the MAPE-K loop may usually include operations such as monitoring a performance parameter of a network, analyzing a running status of the network, determining an adjustment policy for network cooperation, and performing an operation on a network management service provider entity and a network management service consumer entity. These operations are performed cyclically, to form a loop operation. Therefore, the loop operation is referred to as a closed-loop control process, which is referred to as a control closed loop or a closed loop for short. There may be a hierarchical relationship between closed-loop control processes, and the two closed-loop control processes may cooperate with each other to ensure network performance and the like. A pair of superior and subordinate closed loops may be in a same network domain or different network domains. For example, a work division manner of the superior and subordinate closed loops is that the superior closed loop is responsible for decomposing an overall performance objective to the subordinate closed loop, and the subordinate closed loop is responsible for monitoring the performance objective, and when the performance objective is to deteriorate to a value below a target value, performing policy analysis and decision execution, to optimize performance to meet a target requirement. In this way, two or more closed-loop control processes may form a tree structure, which is referred to as a closed-loop control process tree in embodiments of this application. FIG. 4 shows an example of the closed-loop control process tree.

Currently, closed-loop control process management is usually performed for a single closed-loop control process. Consequently, efficiency is low, and diversified management requirements of the network management service provider entity on the closed-loop control processes cannot be met.

An embodiment of this application provides a network management method, including: receiving first request information, where the first request information is used to request whether to perform a management operation on a first subordinate closed-loop control process set of a closed-loop control process in addition to performing the management operation on the closed-loop control process, and the closed-loop control process is used to manage a network entity or a network service; and performing the management operation based on the first request information. The first request information is not only used to request to perform the management operation on the closed-loop control process, but also indicates whether to perform the management operation on the first subordinate closed-loop control process set of the closed-loop control process, so that a plurality of closed-loop control processes can be managed, thereby improving management efficiency of the closed-loop control processes.

The following describes implementations of this application by using specific embodiments. Persons skilled in the art may understand other advantages and effects of this application based on content disclosed in this specification. Although descriptions of this application are provided with reference to preferred embodiments, this does not mean that features of this application are limited to this implementation. On the contrary, a purpose of describing this application with reference to the implementations is to cover another option or modification that may be derived based on the claims of this application. To provide an in-depth understanding of this application, the following descriptions include a plurality of specific details. This application may be alternatively implemented without using these details. In addition, to avoid confusion or blurring a focus of this application, some specific details are omitted from the descriptions. It may be understood that in a case that no conflict occurs, embodiments in this application and the features in embodiments may be mutually combined.

If used, the following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise specified, "a plurality of" means two or more than two.

FIG. 2 is a diagram of a structure of a network management system according to an embodiment of this application. The network management system 200 includes a first network management service provider entity 201 and a network management service consumer entity 202.

The first network management service provider entity 201 is a provider of a network management service. In this embodiment of this application, the first network management service provider entity 201 is a closed-loop control process management service producer, and is responsible for receiving first request information sent by the network management service consumer entity 202, managing a closed-loop control process based on the first request information, and sending an execution result of a management operation performed on the closed-loop control process to the network management service consumer entity 202. The first request information is used to request whether to perform the management operation on a first subordinate closed-loop control process set of the closed-loop control process in addition to performing the management operation on the closed-loop control process. The closed-loop control process is used to manage a network entity or a network service (that is, a service that is run on the network entity). The network entity may be a physical network entity or may be a virtual network entity, for example, a network resource (for example, a virtual network function (Virtual Network Function, VNF) or a physical network function) or a program entity (for example, a closed loop or a closed-loop component). The network service may be a cloud service, a resource facing service (Resource Facing Service, RFS), a customer facing service (Customer Facing Service, CFS), or the like. The first network management service provider entity and the network management service consumer entity each may be a single device or a combination of a plurality of devices, or the first network management service provider entity and the network management service consumer entity may be a same entity. The network management service consumer entity 202 is a consumer of the network management service. In this embodiment of this application, the network management service consumer entity 202 is a closed-loop control process management service consumer, and is responsible for sending the first request information for the management operation performed on the closed-loop control process, and receiving the execution result of the management operation performed on the closed-loop control process.

Optionally, the management operation is a pause operation, a stop operation, a resume operation, or an operation of obtaining pause point information.

Optionally, when the first request information is used to request the first network management service provider entity 201 to perform the management operation on the first subordinate closed-loop control process set in addition to performing the management operation on the closed-loop control process, the first network management service provider entity 201 is further configured to: perform the management operation on the closed-loop control process, and trigger the management operation to be performed on the first subordinate closed-loop control process set; or when the first request information is used to request the first network management service provider entity 201 not to perform the management operation on the first subordinate closed-loop control process set except for performing the management operation on the closed-loop control process, the first network management service provider entity 201 is further configured to: perform the management operation on the closed-loop control process, but not trigger the management operation to be performed on the first subordinate closed-loop control process set.

Optionally, when the first request information is used to request to perform the management operation on the first subordinate closed-loop control process set in addition to performing the management operation on the closed-loop control process, the first request information includes range information, and the range information is used to describe the first subordinate closed-loop control process set, or is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is at least one of the pause operation, the stop operation, or the resume operation, the first request information further includes a pause point in at least one subordinate closed-loop control process in the first subordinate closed-loop control process set.

Optionally, the network management system 200 may further include a second network management service provider entity 203. The first subordinate closed-loop control process set includes a second subordinate closed-loop control process set directly managed by the first network management service provider entity 201, and the first network management service provider entity 201 is further configured to perform the management operation on the second subordinate closed-loop control process set. Alternatively, the first subordinate closed-loop control process set includes a third subordinate closed-loop control process set directly managed by the second network management service provider entity, and the first network management service provider entity 201 is further configured to send second request information to the second network management service provider entity 203, where the second request information is used to request the second network management service provider entity 203 to perform the management operation on the third subordinate closed-loop control process set.

Optionally, the first network management service provider entity 201 is further configured to obtain or receive an execution result that is of the management operation and that is sent by the second network management service provider entity 203.

Optionally, the first network management service provider entity 201 is further configured to output or send the execution result of the management operation to the network management service consumer entity 202.

The foregoing network management system may be a network management system across network domains (network domains) (referred to as a "domain" for short) or in a single network domain.

The network domain may include an end-to-end (end-to-end, E2E) management domain (management domain, MD), a radio access network (radio access network, RAN) MD, a transport network (transport network, TN) MD, a core network (core network, CN) MD, and one or more network functions (network functions, NFs) in the RAN/TN/CN MD.

The E2E MD may correspond to an NMS or an operations support system (operations support system, OSS). The RAN/TN/CN MD may correspond to an element management system (element management system, EMS). The NF may correspond to an access network device, a transport network device, or a core network device, for example, a base station, a switch, a router, or a core network element (for example, a session management function (session management function, SMF), an access and mobility management function (access and mobility management function, AMF), or a network data analytics function (network data analytics function, NWDAF)).

The foregoing network domain may also be referred to as a network object, a network element, or the like. The network domain indicates a physical or logical entity including network devices in a same network management scope. For example, the network domain may be a wireless domain, a core network domain, a transport domain, or a mobile network end-to-end domain. The wireless domain may include a base station, a cell, user equipment (user equipment, UE), a network device in a wireless device management system, and the like. The core network domain may include a core network element, for example, an SMF, an NWDAF, an AMF, or a network device in a core network device management system. The transport domain may include a switch, a router, a network device in a transport network device management system, and the like. The mobile network end-to-end domain includes network devices in the wireless domain, the core network domain, the transport domain, and the network management system (Network Management System, NMS), and the like. The network management system NMS may also be referred to as an operations support system (operations support system, OSS)/business support system (business support system, BSS) sometimes. The network element is also referred to as a network function. Each network domain may include one or more network elements.

FIG. 3 is a schematic flowchart of a network management method according to an embodiment of this application. For example, the method may include the following steps.

S301: Send first request information.

S301 may be performed by a network management service consumer entity. Correspondingly, a first network management service provider entity receives the first request information.

The first request information is used to request the first network management service provider entity whether to perform a management operation on a first subordinate closed-loop control process set of a closed-loop control process in addition to performing the management operation on the closed-loop control process. The closed-loop control process is used to manage a network entity or a network service.

In a possible implementation, the management operation is a pause operation, a stop operation, a resume operation, or an operation of obtaining pause point information. Details are separately described as follows.

The pause operation means pausing the closed-loop control process, so that running of the closed-loop control process is paused. An implementation of the pause operation may be placing the closed-loop control process in a sandbox, so that the closed-loop control process is invisible. To be specific, when the pause operation on the closed-loop control process is implemented by placing the closed-loop control process in the sandbox, the closed-loop control process is actually still running. However, because the closed-loop control process is in an invisible state, data, a result, a message, or the like generated during the running of the closed-loop control process cannot be sent, thereby implementing the pause operation on the closed-loop control process. The implementation of the pause operation is not limited in this embodiment of this application. For example, another implementation of the pause operation may be suspending a related thread or process. Because one or more pause points may be set in the closed-loop control process, another implementation of the pause operation may be implementing the pause operation on the closed-loop control process by enabling the pause point in the closed-loop control process.

The stop operation means stopping the closed-loop control process, so that running of the closed-loop control process is stopped. It may be understood that, different from a closed-loop control process on which the pause operation is performed, a closed-loop control process on which the stop operation is performed cannot be resumed. An implementation of the stop operation may be destroying the closed-loop control process, for example, terminating a related thread or process. Another implementation of the stop operation may be implementing the stop operation on the closed-loop control process by enabling a pause point in the closed-loop control process and setting that the pause point cannot be disabled.

The resume operation means resuming the closed-loop control process, so that running of the closed-loop control process that has been paused is resumed. It may be understood that the resume operation may cause running of a paused closed-loop control process to be continued, but cannot cause running of a stopped closed-loop control process to be continued. An implementation of the resume operation may be taking the closed-loop control process out of the sandbox, so that the closed-loop control process is visible. In this case, data, a result, a message, or the like generated during the running of the closed-loop control process may be sent, thereby implementing the resume operation on the closed-loop control process. Another implementation of the resume operation may be implementing the resume operation on the closed-loop control process by disabling a pause point in the closed-loop control process. The implementation of the resume operation is not limited in this embodiment of this application. For example, another implementation of the resume operation may be resuming a related thread or process from a suspended state to a running state.

Obtaining the pause point information means obtaining a pause point supported in the closed-loop control process and related information. The pause point is a location usually defined in the closed-loop control process, and execution of the closed-loop control process may be temporarily stopped at the location. When a pause point of a stage in the closed-loop control process is enabled and reached during the execution of the closed-loop control process, sending of information that should have been sent to a next stage is temporarily stopped. For a definition of the pause point, refer to ETSI GS ZSM 009-1 [i.33]. For an implementation of the pause point, refer to a possible implementation of the pause point defined in ETSI GS ZSM 009-1 [i.36].

In a possible implementation, when the management operation is the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes the pause point in the closed-loop control process. It may be understood that the foregoing descriptions of the management operation are some examples, and should not constitute any limitation on this embodiment of this application.

In a possible implementation, the pause point information in the first request information may be obtained by the network management service consumer entity by sending, to the first network management service provider entity, third request information that is used to request to obtain the pause point information. It may be understood that the network management service consumer entity may obtain pause point information of the closed-loop control process, or may obtain pause point information of the closed-loop control process and the subordinate closed-loop control process of the closed-loop control process. For example, the network management service consumer entity sends the third request information to the first network management service provider entity. If the network management service consumer entity requests to obtain pause point information of a closed-loop control process Q in the third request information, after receiving the third request information, the first network management service provider entity sends one or more pieces of pause point information in the closed-loop control process to the network management service consumer entity. If the network management service consumer entity requests to obtain pause point information of a closed-loop control process Q and a subordinate closed-loop control process of the closed-loop control process Q in the third request information, and the subordinate closed-loop control process of the closed-loop control process Q includes a closed-loop control process Q1 and a closed-loop control process Q2, after receiving the third request information, the first network management service provider entity sends pause point information of the closed-loop control processes Q, Q1, and Q2 to the network management service consumer entity. It may be understood that for a manner in which the network management service consumer entity sends, to the first network management service provider entity, the third request information that is used to request to obtain the pause point information, to obtain the pause point information, refer to an implementation in which the network management service consumer entity sends the first request information in this embodiment of this application.

In a possible implementation, the pause point information in the first request information may be pre-stored in the network management service consumer entity. Alternatively, after a network management service has requested to obtain the pause point information, the obtained pause point information may be stored in the network management service consumer entity. This is not limited in this embodiment of this application.

There is a hierarchical relationship between closed-loop control processes. The first subordinate closed-loop control process set may be a universal set or a subset of a subordinate closed-loop control process set of the closed-loop control process. The subordinate closed-loop control process set may include a direct subordinate closed-loop control process set and an indirect subordinate closed-loop control process set. The closed-loop control process and a closed-loop control process in the subordinate closed-loop control process set may belong to a same network domain, or may belong to different network domains. Closed-loop control processes in the subordinate closed-loop control process set may belong to a same network domain, or may belong to different network domains. Closed-loop control processes in different network domains are managed by different network management service provider entities.

FIG. 4 is a diagram of a relationship between closed-loop control processes according to an embodiment of this application.

In FIG. 4, closed-loop control processes a2, a3, and b1 are direct subordinate closed-loop control processes of a closed-loop control process a1, and closed-loop control processes b2, b3, c1, c2, c3, and c4 are indirect subordinate closed-loop control processes of the closed-loop control process a1. In other words, a subordinate closed-loop control process set of the closed-loop control process a1 includes the closed-loop control processes a2, a3, b1, b2, b3, c1, c2, c3, and c4. The closed-loop control processes a1, a2, and a3 are closed-loop control processes in a network domain a, and are managed by a network management service provider entity A. The closed-loop control processes b1, b2, and b3 are closed-loop control processes in a network domain b, and are managed by a network management service provider entity B. The closed-loop control processes c1, c2, c3, and c4 are closed-loop control processes in a network domain c, and are managed by a network management service provider entity C.

S302: Perform the management operation based on the first request information.

S302 may be performed by the first network management service provider entity.

In a possible implementation, when the first request information is used to request the first network management service provider entity to perform the management operation on the first subordinate closed-loop control process set in addition to performing the management operation on the closed-loop control process, that the first network management service provider entity performs the management operation based on the first request information includes: The first network management service provider entity performs the management operation on the closed-loop control process, and triggers the management operation to be performed on the first subordinate closed-loop control process set.

In FIG. 4, when the first request information is used to request the network management service provider entity A to perform the management operation on a first subordinate closed-loop control process set of the closed-loop control process a1 in addition to performing the management operation on the closed-loop control process a1, the network management service provider entity A performs the management operation on the closed-loop control process a1, and the network management service provider entity A triggers the management operation to be performed on the first subordinate closed-loop control process set of the closed-loop control process a1. The first subordinate closed-loop control process set of the closed-loop control process a1 includes one or more of the closed-loop control processes a2, a3, b1, b2, b3, c1, c2, c3, and c4.

In a possible implementation, when the first request information is used to request the first network management service provider entity to perform the management operation on the first subordinate closed-loop control process set in addition to performing the management operation on the closed-loop control process, the first request information includes range information. The range information is used to describe the first subordinate closed-loop control process set, or is used to determine the first subordinate closed-loop control process set. For example, in FIG. 4, when the first request information is used to request the network management service provider entity A to perform the management operation on the first subordinate closed-loop control process set of the closed-loop control process a1 in addition to performing the management operation on the closed-loop control process a1, the first subordinate closed-loop control process set on which the management operation needs to be performed and that is in the subordinate closed-loop control process set of the closed-loop control process may be determined by using the range information.

It is not to agree to uniformly perform the management operation or uniformly perform no management operation on all subordinate closed-loop control processes of the closed-loop control process. Instead, a first subordinate closed-loop control process on which the management operation needs to be performed is determined by using the range information. This further improves flexibility of a management mode of the closed-loop control processes.

In a possible implementation, the range information includes an identifier of a subordinate closed-loop control process that is of the closed-loop control process and on which the management operation is to be performed.

Optionally, the first subordinate closed-loop control process set determined by using the range information including the identifier of the subordinate closed-loop control process that is of the closed-loop control process and on which the management operation is to be performed includes a closed-loop control process in the subordinate closed-loop control process set except a subordinate closed-loop control process set of the closed-loop control process corresponding to the identifier. In other words, in the subordinate closed-loop control process set of the closed-loop control process, the management operation is not performed on the subordinate closed-loop control process set of the closed-loop control process corresponding to the identifier, and the management operation is performed on another closed-loop control process. In this implementation, the first subordinate closed-loop control process set may include the closed-loop control process corresponding to the identifier, or may not include the closed-loop control process corresponding to the identifier. Whether the first subordinate closed-loop control process set includes the closed-loop control process corresponding to the identifier may be specified in the first request information, or may be preset by default. This is not limited in this embodiment of this application. For example, in FIG. 4, the first request information is used to request to perform the management operation on the closed-loop control process a1, and a closed-loop control process on which the management operation is performed by default includes the closed-loop control process corresponding to the identifier. If the identifier in the range information is the closed-loop control process c1, the first subordinate closed-loop control process set may include the closed-loop control processes a2, a3, b1, b2, b3, and c1. Further, the range information may be a list of identifiers corresponding to a plurality of closed-loop control processes.

Optionally, the first subordinate closed-loop control process set determined by using the range information including the identifier of the subordinate closed-loop control process that is of the closed-loop control process and on which the management operation is to be performed includes the closed-loop control process corresponding to the identifier. For example, in FIG. 4, the first request information is used to request to perform the management operation on the closed-loop control process a1, and a closed-loop control process on which the management operation is performed by default includes the closed-loop control process corresponding to the identifier. If the identifier in the range information is the closed-loop control process c1, the first subordinate closed-loop control process set may include the closed-loop control process c1. Further, the range information may be a list of identifiers corresponding to a plurality of closed-loop control processes. In this case, the first subordinate closed-loop control process set includes a set of the closed-loop control processes corresponding to the identifiers in the list.

In a possible implementation, the range information includes a level of a subordinate closed-loop control process that is of the closed-loop control process and on which the management operation is to be performed.

A level of a closed-loop control process is a quantity of levels between the closed-loop control process and a closed-loop control process at a root node (referred to as a root closed-loop control process for short) in a closed-loop control process tree, and may be usually determined based on a quantity of closed-loop control processes that need to be passed through from the root closed-loop control process to the closed-loop control process. For example, it is assumed that a target closed-loop control process is at a level 0. In this case, a direct subordinate closed-loop control process of the target closed-loop control process is at a level 1, and an indirect subordinate closed-loop control process of the target closed-loop control process is at a level 2 or above. A direct superior or direct subordinate closed-loop control process of the closed-loop control process is a closed-loop control process that may form a hierarchical relationship with the closed-loop control process without using another closed-loop control process. An indirect superior or indirect subordinate closed-loop control process of the closed-loop control process is a closed-loop control process that needs another closed-loop control process to form a hierarchical relationship with the closed-loop control process. As shown in FIG. 4, if the closed-loop control process a1 is a root node and is at a level 0, the closed-loop control processes a2, a3, and b1 are direct subordinate closed-loop control processes of the closed-loop control process a1 and are at a level 1. The closed-loop control processes c1, b2, and b3 need to reach the closed-loop control process a1 through the closed-loop control process b1 (or establish a relationship with the closed-loop control process a1 through the closed-loop control process b1). Therefore, the closed-loop control processes c1, b2, and b3 are at a level 2. Similarly, it can be learned that the closed-loop control processes c2, c3, and c4 are at a level 3.

Optionally, the first subordinate closed-loop control process set determined by using the range information including the level of the subordinate closed-loop control process that is of the closed-loop control process and on which the management operation is to be performed includes a closed-loop control process set between the closed-loop control process and the closed-loop control process corresponding to the level. For example, in FIG. 4, the first request information is used to request to perform the management operation on the closed-loop control process a1, and the subordinate closed-loop control process that is of the closed-loop control process and on which the management operation is to be performed is the closed-loop control process c1, and is at the level 2. In this case, the first subordinate closed-loop control process set may include the closed-loop control processes a2, a3, b1, b2, b3, and c1.

Optionally, the first subordinate closed-loop control process set determined by using the range information including the level of the subordinate closed-loop control process that is of the closed-loop control process and on which the management operation is to be performed includes a closed-loop control process set corresponding to the level. For example, in FIG. 4, the first request information is used to request to perform the management operation on the closed-loop control process a1, and the subordinate closed-loop control process that is of the closed-loop control process and on which the management operation is to be performed is the closed-loop control process, and is at the level 2. In this case, the first subordinate closed-loop control process set may include the closed-loop control processes b2, b3, and c1. Further, the range information may be a set of levels corresponding to a plurality of closed-loop control processes. In this case, the first subordinate closed-loop control process set includes a set of the closed-loop control processes corresponding to the levels in a list. For example, if the level set is {1, 2}, the first subordinate closed-loop control process set may include the closed-loop control processes a1, a2, b1, b2, b3, and c1. If the level set is {1, 3}, the first subordinate closed-loop control process set may include the closed-loop control processes a1, a2, b1, c2, c3, and c4.

In a possible implementation, the range information includes a network domain including a subordinate closed-loop control process that is of the closed-loop control process and on which the management operation is to be performed.

The first subordinate closed-loop control process set determined by using the range information including the network domain including the subordinate closed-loop control process that is of the closed-loop control process and on which the management operation is to be performed includes a set of closed-loop control processes in the network domain. For example, in FIG. 4, the first request information is used to request to perform the management operation on the closed-loop control process a1, and the network domain including the subordinate closed-loop control process that is of the closed-loop control process and on which the management operation is to be performed is the network domain b. In this case, the first subordinate closed-loop control process set may include the closed-loop control processes b1, b2, and b3. Further, the range information may be a list of a plurality of network domains corresponding to a plurality of subordinate closed-loop control processes. In this case, the first subordinate closed-loop control process set includes a set of the closed-loop control processes in the network domains in the list. Optionally, the management operation may be considered by default as needing to be performed on a subordinate closed-loop control process on which the management operation is to be performed and that is in a network domain including the closed-loop control process.

In a possible implementation, the range information indicates all the subordinate closed-loop control processes of the closed-loop control process.

The first subordinate closed-loop control process set corresponding to all the subordinate closed-loop control processes of the closed-loop control process that are indicated by the range information is the subordinate closed-loop control processes of the closed-loop control process. All the subordinate closed-loop control processes include a direct subordinate closed-loop control process of the closed-loop control process and an indirect subordinate closed-loop control process up to a last level. For example, in FIG. 4, the first request information is used to request to perform the management operation on the closed-loop control process a1, and the range information indicates all the subordinate closed-loop control processes of the closed-loop control process. In this case, the first subordinate closed-loop control process set includes the closed-loop control processes a2, a3, b1, b2, b3, c1, c2, c3, and c4. It may be understood that, when the closed-loop control process has only one level of subordinate closed-loop control process on which the management operation is to be performed, a direct subordinate closed-loop control process in this case is a subordinate closed-loop control process at a last level. In other words, all the subordinate closed-loop control processes are the direct subordinate closed-loop control process.

Based on actual situations, different range information is used to represent first subordinate closed-loop control process sets of different ranges, to effectively reduce a resource waste.

In a possible implementation, when the first request information is used to request the first network management service provider entity not to perform the management operation on the first subordinate closed-loop control process except for performing the management operation on the closed-loop control process, that the first network management service provider entity performs the management operation based on the first request information includes: The first network management service provider entity performs the management operation on the closed-loop control process, but does not trigger the management operation to be performed on the first subordinate closed-loop control process set.

In FIG. 4, when the first request information is used to request the network management service provider entity A not to perform the management operation on a first subordinate closed-loop control process set of the closed-loop control process a1 except for performing the management operation on the closed-loop control process a1, the network management service provider entity A performs the management operation on the closed-loop control process a1, and the network management service provider entity A does not trigger the management operation to be performed on the first subordinate closed-loop control process set of the closed-loop control process a1. The first subordinate closed-loop control process of the closed-loop control process a1 includes the closed-loop control processes a2, a3, b1, b2, b3, c1, c2, c3, and c4.

Based on the first request information, the management operation may be triggered to be performed on the first subordinate closed-loop control process set, or the management operation may not be triggered to be performed on the first subordinate closed-loop control process set. This improves flexibility of a management mode of the closed-loop control processes.

In a possible implementation, the first subordinate closed-loop control process set includes a second subordinate closed-loop control process set directly managed by the first network management service provider entity, and triggering the management operation to be performed on the first subordinate closed-loop control process set includes: The first network management service provider entity performs the management operation on the second subordinate closed-loop control process set. It may be understood that the second subordinate closed-loop control process set is a set of subordinate closed-loop control processes that are in the first subordinate closed-loop control process set and that are in a same network domain as the closed-loop control process. In other words, direct management means that the second subordinate closed-loop control process set does not need to be managed by another network management service provider entity, but is managed by the same network management service provider entity as the closed-loop control process. Therefore, when the first subordinate closed-loop control process set includes the second subordinate closed-loop control process set directly managed by the first network management service provider entity, the first network management service provider entity may perform the management operation on the second subordinate closed-loop control process set. For example, in FIG. 4, the first request information is used to request to perform the management operation on the closed-loop control process a1 and the first subordinate closed-loop control process set of the closed-loop control process. If the first subordinate closed-loop control process set includes the closed-loop control processes a2 and a3, because the closed-loop control processes a2 and a3 and the closed-loop control process a1 belong to the network domain a, the network management service provider entity A may perform the management operation on the closed-loop control process a1 and perform the management operation on the closed-loop control processes a2 and a3.

In a possible implementation, the first subordinate closed-loop control process set includes a subordinate closed-loop control process set indirectly managed by the first network management service provider entity, for example, includes a third subordinate closed-loop control process set directly managed by a second network management service provider entity. In this case, triggering the management operation to be performed on the first subordinate closed-loop control process set includes the following steps.

S303: Send second request information.

S303 may be performed by the first network management service provider entity. Correspondingly, the second network management service provider entity receives the second request information sent by the first network management service provider entity.

The second request information is used to request the second network management service provider entity to perform the management operation on the third subordinate closed-loop control process set.

It may be understood that concepts of direct management and indirect management are specific for a network management service provider entity or a network domain, and direct management and indirect management cannot be discussed separately from the network management service provider entity or the network domain. For example, an expression "a closed-loop control process is directly/indirectly managed" is incorrect. The expression should be "a closed-loop control process is directly/indirectly managed by a network management service provider entity". For a network management service provider entity, the network management service provider entity directly manages a closed-loop control process in a network domain managed by the network management service provider entity. The network management service provider entity indirectly manages a closed-loop control process that is in a subordinate closed-loop control process of the closed-loop control process in the network domain managed by the network management service provider entity and that is managed by another network management service provider entity in another network domain. It may be understood that the closed-loop control process that is indirectly managed by the network management service provider entity is directly managed by the another network management service provider entity. For example, in FIG. 4, the closed-loop control process b1 is in the network domain b, and is managed by the network management service provider entity B. In other words, for the network management service provider entity B, the closed-loop control process b1 is directly managed by a network management service provider entity B1. It can be learned that the closed-loop control process b1 is a subordinate closed-loop control process of the closed-loop control process a1. In other words, there is a hierarchical relationship between the closed-loop control process b1 and the closed-loop control process a1, and the closed-loop control process b1 is a subordinate of the closed-loop control process a1. The closed-loop control process a1 is in the network domain a, and is managed by the network management service provider entity A. In this case, for the network management service provider entity A, the closed-loop control process b1 is indirectly managed by the network management service provider entity A.

It may be understood that the second network management service provider entity may be any one or more network management service provider entities other than the first network management service provider entity. The third subordinate closed-loop control process set directly managed by the second network management service provider entity is a closed-loop control process set in a network domain managed by the second network management service provider entity, and a subordinate closed-loop control process set of the closed-loop control process set in the network domain managed by the second network management service provider entity. It may be understood that the closed-loop control process set in the network domain managed by the second network management service provider entity may be in the network domain managed by the second network management service provider entity, or may be in a network domain managed by another network management service provider entity. The second request information may be determined based on the first request information. For example, in FIG. 4, the first request information is used to request the network management service provider entity A to perform the management operation on the closed-loop control process a1. If the first subordinate closed-loop control process set includes the closed-loop control processes b1, b2, and b3, because the closed-loop control processes b1, b2, and b3 are managed by the network management service provider entity B, the network management service provider entity A needs to send the second request information to the network management service provider entity B, to request the network management service provider entity B to perform the management operation on the closed-loop control process b1 and the subordinate closed-loop control processes b2 and b3 of the closed-loop control process b1. If the first request information is used to request the network management service provider entity A to perform the management operation on the closed-loop control process a1 and the first subordinate closed-loop control process set, and the first subordinate closed-loop control process set includes the closed-loop control process b1 but does not include the closed-loop control processes b2 and b3, the network management service provider entity A needs to send the second request information to the network management service provider entity B, to request the network management service provider entity B to perform the management operation on the closed-loop control process b1 but not to perform the management operation on the closed-loop control processes b2 and b3. Because the second request information is sent to the second network management service provider entity only when the first subordinate closed-loop control process set includes the third subordinate closed-loop control process set directly managed by the second network management service provider entity, S303 is an optional step, and is represented by dashed lines in FIG. 3.

In a possible implementation, the following step may be further included.

S304: Output or send an execution result of the management operation.

S304 may be performed by the second network management service provider entity. Correspondingly, the first network management service provider entity receives the execution result that is of the management operation and that is sent by the second network management service provider entity.

Because the execution result that is of the management operation and that is sent by the second network management service provider entity may be received only when the second request information is sent to the second network management service provider entity, S304 is an optional step, and is represented by dashed lines in FIG. 3.

It may be understood that when the second network management service provider entity receives the second request information sent by the first network management service provider entity, the first network management service provider entity is equivalent to a new network management service consumer entity, and the second network management service provider entity is equivalent to a new first network management service provider entity. In other words, after the second network management service provider entity receives the second request information, the second network management service provider entity serves as the new first network management service provider entity to perform the method steps in this embodiment of this application. For example, in FIG. 4, the first request information is used to request to perform the management operation on the closed-loop control process a1 and perform the management operation on the first subordinate closed-loop control process set. The first subordinate closed-loop control process set includes the closed-loop control processes a2, a3, b1, b2, b3, c1, c2, c3, and c4. In this case, the network management service provider entity A performs the management operation on the closed-loop control processes a1, a2, and a3, and the network management service provider entity A sends the second request information to the network management service provider entity B, to request the network management service provider entity B to perform the management operation on the closed-loop control processes b1, b2, and b3 and a subordinate closed-loop control process set of the closed-loop control processes b1, b2, and b3. After receiving the second request information, the network management service provider entity B performs the management operation on the closed-loop control processes b1, b2, and b3. Because a closed-loop control process in the network domain c exists in a subordinate closed-loop control process of b1, the network management service provider entity B may send third request information to the network management service provider entity C, to request the network management service provider entity C to perform the management operation on the closed-loop control processes c1, c2, c3, and c4. After receiving the third request information, the network management service provider entity C performs the management operation on the closed-loop control processes c1, c2, c3, and c4, and the network management service provider entity C may send an execution result of the management operation to the network management service provider entity B. Similarly, the network management service provider entity B may send an execution result of the management operation to the network management service provider entity A. It may be understood that the execution result that is of the management operation and that is sent by the network management service provider entity B to the network management service provider entity A may include the execution result that is of the management operation and that is received by the network management service provider entity B from the network management service provider entity C.

The management operation is performed on the second subordinate closed-loop control process set that is in the first subordinate closed-loop control process set and that is managed by the first network management service provider entity, and/or the second request information is sent to the second network management service provider entity that manages the third subordinate closed-loop control process set in the first subordinate closed-loop control process set, so that a management capability and a coordination capability of the management mode of the closed-loop control processes can be improved.

In a possible implementation, the following step may be further included.

S305: Output or send an execution result of the management operation.

S305 may be performed by the first network management service provider entity. Correspondingly, the network management service consumer entity receives the execution result that is of the management operation and that is sent by the first network management service provider entity.

It may be understood that the execution result that is of the management operation and that is sent by the first network management service provider entity to the network management service consumer entity may include the execution result that is of the management operation and that is received by the first network management service provider entity from the second network management service provider entity. The first network management service provider entity sends the execution result of the management operation to the network management service consumer entity, so that the network management service consumer entity can obtain an execution status of the first request information. The execution result may be information indicating that the pause point is enabled, the pause point is reached, the closed-loop control process has been paused, the closed-loop control process has been resumed, the closed-loop control process has been stopped, the pause point in the closed-loop control process has been successfully sent, and the like. The execution result is related to a management operation that specifically needs to be performed. For example, when the management operation that needs to be performed is pausing the closed-loop control process, the execution result may be that the closed-loop control process has been paused. Because the first network management service provider entity may alternatively perform the management operation based on the first request information without sending the execution result of the management operation to the network management service consumer entity, S305 may be an optional step, and is represented by dashed lines in FIG. 3.

In a possible implementation, after the network management service consumer entity receives the execution result of the management operation, the following step may be further included.

S306: Send fourth request information to request to drive a fourth closed-loop control process set, or send fifth request information to request whether to perform a management operation on the first subordinate closed-loop control process set of the closed-loop control process in addition to performing the management operation on the closed-loop control process.

S306 may be performed by the network management service consumer entity.

In a possible case, the first request information sent by the network management service consumer entity is used to request to perform the management operation, that is, the pause operation or the stop operation on the closed-loop control process or the closed-loop control process and the first subordinate closed-loop control process set of the closed-loop control process. This may be caused by a conflict between the closed-loop control process or the closed-loop control process and the first subordinate closed-loop control process set of the closed-loop control process and another closed-loop control process/closed-loop control process set (fourth closed-loop control process set) that needs to execute a target. Therefore, the network management service consumer entity pauses the closed-loop control process or the closed-loop control process and the first subordinate closed-loop control process set of the closed-loop control process by sending the first request information. After receiving an execution result indicating that the closed-loop control process or the closed-loop control process and the first subordinate closed-loop control process set of the closed-loop control process have been paused, the network management service may send the fourth request information to drive the fourth closed-loop control process set to perform an operation on a network entity managed by one or more closed-loop control processes in the fourth closed-loop control process set. The fourth closed-loop control process set may belong to a same network domain, or may belong to different network domains. The fourth closed-loop control process set may include the closed-loop control process managed by the first network management service provider entity, or may not include the closed-loop control process managed by the first network management service provider entity.

After the management operation is performed, when the closed-loop control process or the closed-loop control process and the first subordinate closed-loop control process set of the closed-loop control process need to be resumed to a state that is before the management operation is performed, the fifth request information may be sent, to request whether to perform the management operation on the first subordinate closed-loop control process set of the closed-loop control process in addition to performing the management operation on the closed-loop control process. For example, when the network management service consumer entity sends the first request information to request to perform the pause operation on the closed-loop control process or the closed-loop control process and the first subordinate closed-loop control process set of the closed-loop control process, after receiving an execution result indicating that the pause is completed, the network management service consumer entity may further send the fifth request information to request to perform the resume operation on the closed-loop control process or the closed-loop control process and the first subordinate closed-loop control process set of the closed-loop control process. For example, when the network management service consumer entity sends the first request information to request to perform the resume operation on the closed-loop control process or the closed-loop control process and the first subordinate closed-loop control process set of the closed-loop control process, after receiving an execution result indicating that the pause is completed, the network management service consumer entity may further send the fifth request information to request to perform the pause operation on the closed-loop control process or the closed-loop control process and the first subordinate closed-loop control process set of the closed-loop control process. When the first request information sent by the network management service consumer entity is used to request to perform an operation of obtaining pause point information on the closed-loop control process or the closed-loop control process and the first subordinate closed-loop control process set of the closed-loop control process, the network management service consumer entity may further send the fifth request information, to request to perform the management operation on the closed-loop control process or the closed-loop control process and the first subordinate closed-loop control process set of the closed-loop control process by using the pause point in the closed-loop control process or pause points in the closed-loop control process and the first subordinate closed-loop control process set of the closed-loop control process. It may be understood that, after receiving the execution result, the network management service consumer entity may alternatively not perform S306. Therefore, S306 is an optional step, and is represented by dashed lines in FIG. 3.

The first request information is not only used to request to perform the management operation on the closed-loop control process, but also indicates whether to perform the management operation on the first subordinate closed-loop control process set of the closed-loop control process, so that a plurality of closed-loop control processes can be managed, thereby improving management efficiency of the closed-loop control processes.

The network management service provider entity A is used as an example of the first network management service provider entity in the method in this embodiment of this application, but this is not limited. For example, the first network management service provider entity is also applicable to the network management service provider entity B, the network management service provider entity C, or the like.

According to the network management method provided in this embodiment of this application, the first request information is not only used to request to perform the management operation on the closed-loop control process, but also indicates whether to perform the management operation on the first subordinate closed-loop control process set of the closed-loop control process, so that the plurality of closed-loop control processes can be managed, thereby improving the management efficiency of the closed-loop control processes.

In addition, based on the first request information, the management operation may be triggered to be performed on the first subordinate closed-loop control process set, or the management operation may not be triggered to be performed on the first subordinate closed-loop control process set. This improves the flexibility of the management mode of the closed-loop control processes.

In addition, it is not to agree to uniformly perform the management operation or uniformly perform no management operation on all the subordinate closed-loop control processes of the closed-loop control process. Instead, the first subordinate closed-loop control process on which the management operation needs to be performed is determined by using the range information. This further improves the flexibility of the management mode of the closed-loop control processes.

In addition, based on the actual situations, the different range information is used to represent the first subordinate closed-loop control process sets of the different ranges, to effectively reduce the resource waste.

In addition, the management operation is performed on the second subordinate closed-loop control process set that is in the first subordinate closed-loop control process set and that is managed by the first network management service provider entity, and/or the second request information is sent to the second network management service provider entity that manages the third subordinate closed-loop control process set in the first subordinate closed-loop control process set, so that the management capability and the coordination capability of the management mode of the closed-loop control processes can be improved.

It may be understood that, in the foregoing embodiments, the method and/or the step implemented by the network management service provider entity may alternatively be implemented by a component (for example, a chip or a circuit) that can be used in the network management service provider entity, and the method and/or the step implemented by the network management service consumer entity may alternatively be implemented by a component (for example, a chip or a circuit) that can be used in the network management service consumer entity.

The foregoing mainly describes the solutions provided in embodiments of this application from a perspective of interaction between network elements. Correspondingly, an embodiment of this application further provides a network management apparatus. The network management apparatus is configured to implement the foregoing methods. The network management apparatus may be the network management service provider entity in the foregoing method embodiments, or may be a component that can be used in the network management service provider entity. Alternatively, the network management apparatus may be the network management service consumer entity in the foregoing method embodiments, or may be a component that can be used in the network management service consumer entity. It may be understood that, to implement the foregoing functions, the network management apparatus includes a corresponding hardware structure and/or software module for performing the functions. Persons skilled in the art should be easily aware that, in combination with the examples of modules and algorithm steps described in embodiments disclosed in this specification, this application can be implemented by using hardware or a combination of hardware and computer software. Whether a function is performed by hardware or hardware driven by computer software depends on a particular application and a design constraint condition of the technical solutions. Persons skilled in the art may use different methods to implement the described functions for each particular application, but it should not be considered that the implementation goes beyond the scope of this application.

In embodiments of this application, division into functional modules may be performed on the network management apparatus according to the foregoing method embodiments. For example, division into functional modules may be performed based on corresponding functions, or two or more functions may be integrated into one processing module. The integrated module may be implemented in a form of hardware, or may be implemented in a form of a software functional module. It may be understood that, in embodiments of this application, division into the modules is an example, is merely logical function division, and may be other division in actual implementation.

Based on a same concept as the foregoing network management method, this application further provides the following network management apparatus.

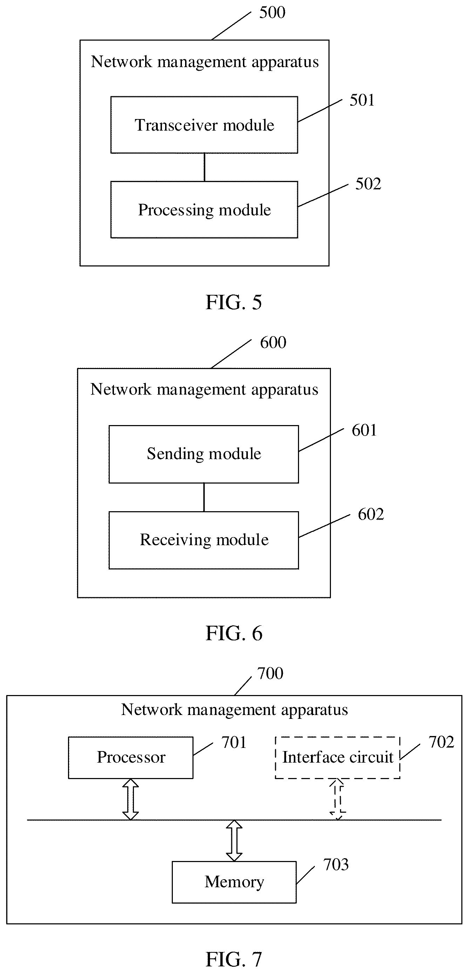

FIG. 5 is a diagram of a structure of a network management apparatus according to an embodiment of this application. The network management apparatus 500 includes a transceiver module 501 and a processing module 502.

The network management apparatus 500 is configured to implement functions of the first network management service provider entity in the foregoing embodiments. The transceiver module 501 is configured to receive first request information, where the first request information is used to request whether to perform a management operation on a first subordinate closed-loop control process set of a closed-loop control process in addition to performing the management operation on the closed-loop control process, and the closed-loop control process is used to manage a network entity or a network service. The processing module 502 is configured to perform the management operation based on the first request information.

The first request information is not only used to request to perform the management operation on the closed-loop control process, but also indicates whether to perform the management operation on the first subordinate closed-loop control process set of the closed-loop control process, so that a plurality of closed-loop control processes can be managed, thereby improving management efficiency of the closed-loop control processes.

Optionally, the management operation is a pause operation, a stop operation, a resume operation, or an operation of obtaining pause point information.

Optionally, when the first request information is used to request to perform the management operation on the first subordinate closed-loop control process set in addition to performing the management operation on the closed-loop control process, the processing module 502 is further configured to: perform the management operation on the closed-loop control process, and trigger the management operation to be performed on the first subordinate closed-loop control process set; or when the first request information is used to request not to perform the management operation on the first subordinate closed-loop control process set except for performing the management operation on the closed-loop control process, the processing module 502 is further configured to: perform the management operation on the closed-loop control process, but not trigger the management operation to be performed on the first subordinate closed-loop control process set.

Based on the first request information, the management operation may be triggered to be performed on the first subordinate closed-loop control process set, or the management operation may not be triggered to be performed on the first subordinate closed-loop control process set. This improves flexibility of a management mode of the closed-loop control processes.

Optionally, when the first request information is used to request to perform the management operation on the first subordinate closed-loop control process set in addition to performing the management operation on the closed-loop control process, the first request information includes range information, and the range information describes the first subordinate closed-loop control process set, or is used to determine the first subordinate closed-loop control process set.

It is not to agree to uniformly perform the management operation or uniformly perform no management operation on all subordinate closed-loop control processes of the closed-loop control process. Instead, a first subordinate closed-loop control process on which the management operation needs to be performed is determined by using the range information. This further improves the flexibility of the management mode of the closed-loop control processes.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all the subordinate closed-loop control processes of the closed-loop control process.

Based on actual situations, different range information is used to represent first subordinate closed-loop control process sets of different ranges, to effectively reduce a resource waste.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the transceiver module 501 is further configured to receive third request information, where the third request information is used to request to obtain the pause point information.

Optionally, the first subordinate closed-loop control process set includes a second subordinate closed-loop control process set directly managed by the first network management service provider entity, and the processing module 502 is further configured to perform the management operation on the second subordinate closed-loop control process set. Alternatively, the first subordinate closed-loop control process set includes a third subordinate closed-loop control process set directly managed by a second network management service provider entity, and the transceiver module 501 is further configured to send second request information to the second network management service provider entity, where the second request information is used to request the second network management service provider entity to perform the management operation on the third subordinate closed-loop control process set.

The management operation is performed on the second subordinate closed-loop control process set that is in the first subordinate closed-loop control process set and that is managed by the first network management service provider entity, and/or the second request information is sent to the second network management service provider entity that manages the third subordinate closed-loop control process set in the first subordinate closed-loop control process set, so that a management capability and a coordination capability of the management mode of the closed-loop control processes can be improved.

Optionally, the transceiver module 501 is further configured to obtain or receive an execution result of the management operation.

Optionally, the transceiver module 501 is further configured to output or send the execution result of the management operation.

For function implementation of the transceiver module 501 and the processing module 502, refer to related descriptions of the first network management service provider entity in FIG. 3.

Based on a same concept as the foregoing network management method, this application further provides the following network management apparatus.

FIG. 6 is a diagram of a structure of another network management apparatus according to an embodiment of this application. The network management apparatus 600 includes a sending module 601 and a receiving module 602.

The network management apparatus 600 is configured to implement functions of the network management service consumer entity in the foregoing embodiments. The sending module 601 is configured to send first request information, where the first request information is used to request whether to perform a management operation on a first subordinate closed-loop control process set of a closed-loop control process in addition to performing the management operation on the closed-loop control process, and the closed-loop control process is used to manage a network entity or a network service. In addition, the receiving module 602 is configured to receive an execution result of the management operation.

Optionally, the management operation is a pause operation, a stop operation, a resume operation, or an operation of obtaining pause point information.

Optionally, the first request information includes range information, and the range information is used to describe the first subordinate closed-loop control process set, or is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the sending module 601 is further configured to send third request information, where the third request information is used to request to obtain the pause point information.

For function implementation of the sending module 601 and the receiving module 602, refer to related descriptions of the network management service consumer entity in FIG. 3.

FIG. 7 is a diagram of a structure of still another network management apparatus according to an embodiment of this application. The network management apparatus 700 includes a processor 701 and a memory 703. The memory 703 is configured to: store instructions executed by the processor 701, store input data needed by the processor 701 to run instructions, or store data generated by running instructions by the processor 701. Optionally, the network management apparatus 700 may further include an interface circuit 702 (represented by dashed lines in the figure), and the processor 701 and the interface circuit 702 are coupled to each other. It may be understood that the interface circuit 702 may be a transceiver or an input/output interface.

The processor 701 is configured to perform the method in the method embodiment shown in FIG. 3.

When the network management apparatus 700 is configured to implement functions of the first network management service provider entity in the foregoing embodiments, the processor 701 is configured to perform the following steps: receiving first request information through the interface circuit 702, where the first request information is used to request whether to perform a management operation on a first subordinate closed-loop control process set of a closed-loop control process in addition to performing the management operation on the closed-loop control process, and the closed-loop control process is used to manage a network entity or a network service; and performing the management operation based on the first request information.

Optionally, the management operation is a pause operation, a stop operation, a resume operation, or an operation of obtaining pause point information.

Optionally, when the first request information is used to request to perform the management operation on the first subordinate closed-loop control process set in addition to performing the management operation on the closed-loop control process, the step of performing the management operation by the processor 701 based on the first request information includes: performing the management operation on the closed-loop control process, and triggering the management operation to be performed on the first subordinate closed-loop control process set; or when the first request information is used to request not to perform the management operation on the first subordinate closed-loop control process set except for performing the management operation on the closed-loop control process, the step of performing the management operation by the processor 701 based on the first request information includes: performing the management operation on the closed-loop control process, but not triggering the management operation to be performed on the first subordinate closed-loop control process set.

Optionally, when the first request information is used to request to perform the management operation on the first subordinate closed-loop control process set in addition to performing the management operation on the closed-loop control process, the first request information includes range information, and the range information is used to describe the first subordinate closed-loop control process set, or is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the processor 701 is further configured to perform the following step: receiving third request information through the interface circuit 702, where the third request information is used to request to obtain the pause point information.

Optionally, the first subordinate closed-loop control process set includes a second subordinate closed-loop control process set directly managed by the first network management service provider entity, and the step of triggering, by the processor 701, the management operation to be performed on the first subordinate closed-loop control process set includes: The first network management service provider entity performs the management operation on the second subordinate closed-loop control process set. Alternatively, the first subordinate closed-loop control process set includes a third subordinate closed-loop control process set directly managed by a second network management service provider entity, and the step of triggering, by the processor 701, the management operation to be performed on the first subordinate closed-loop control process set includes: sending second request information to the second network management service provider entity through the interface circuit 702, where the second request information is used to request the second network management service provider entity to perform the management operation on the third subordinate closed-loop control process set.

Optionally, the processor 701 is further configured to perform the following step: receiving an execution result of the management operation through the interface circuit 702.

Optionally, the processor 701 is further configured to perform the following step: sending the execution result of the management operation through the interface circuit 702.

When the network management apparatus 700 is configured to implement functions of the network management service consumer entity in the foregoing embodiments, the processor 701 is configured to perform the following steps: sending first request information through the interface circuit 702, where the first request information is used to request whether to perform a management operation on a first subordinate closed-loop control process set of a closed-loop control process in addition to performing the management operation on the closed-loop control process, and the closed-loop control process is used to manage a network entity or a network service; and receiving an execution result of the management operation from a first network management service provider entity through the interface circuit.

Optionally, the management operation is a pause operation, a stop operation, a resume operation, or an operation of obtaining pause point information.

Optionally, the first request information includes range information, and the range information is used to describe the first subordinate closed-loop control process set, or is used to determine the first subordinate closed-loop control process set.

Optionally, the range information includes an identifier of a subordinate closed-loop control process that is of the closed-loop control process and on which the management operation is to be performed; the range information includes a level of a subordinate closed-loop control process that is of the closed-loop control process and on which the management operation is to be performed; the range information includes a network domain including a subordinate closed-loop control process that is of the closed-loop control process and on which the management operation is to be performed; or the range information indicates all subordinate closed-loop control processes of the closed-loop control process.

Optionally, when the management operation is any one of the pause operation, the stop operation, or the resume operation, when the first request information is used to request to perform the management operation on the first subordinate closed-loop control process set in addition to performing the management operation on the closed-loop control process, the first request information further includes pause points in the closed-loop control process and at least one subordinate closed-loop control process in the first subordinate closed-loop control process set; or when the first request information is used to request not to perform the management operation on the first subordinate closed-loop control process set except for performing the management operation on the closed-loop control process, the first request information further includes a pause point in the closed-loop control process.

Optionally, the processor 701 is further configured to perform the following step: sending third request information through the interface circuit 702, where the third request information is used to request to obtain the pause point information.

When the network management apparatus is a chip used in the network management service provider entity, the chip implements functions of the network management service provider entity in the foregoing method embodiments. The chip receives information from another module (for example, a radio frequency module or an antenna) in the network management service provider entity, where the information is sent by the network management service consumer entity to the network management service provider entity; or the chip sends information to another module (for example, a radio frequency module or an antenna) in the network management service provider entity, where the information is sent by the network management service provider entity to the network management service consumer entity.

When the network management apparatus is a chip used in the network management service consumer entity, the chip implements functions of the network management service consumer entity in the foregoing method embodiments. The chip receives information from another module (for example, a radio frequency module or an antenna) in the network management service consumer entity, where the information is sent by the network management service provider entity to the network management service consumer entity; or the chip sends information to another module (for example, a radio frequency module or an antenna) in the network management service consumer entity, where the information is sent by the network management service consumer entity to the network management service provider entity.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a network management system, including the foregoing network management apparatus.

An embodiment of this application further provides a circuit. The circuit is coupled to a memory, and the circuit is configured to perform the method shown in the foregoing embodiments. The circuit may include a chip circuit.

It may be understood that one or more of the foregoing modules or modules may be implemented by software, hardware, or a combination thereof. When any one of the foregoing modules or modules is implemented by software, the software exists in a form of a computer program instruction, and is stored in the memory. The processor may be configured to: execute the program instruction and implement the foregoing method procedure. The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a special-purpose logic operation.

When the foregoing modules or modules are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedure.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

It should be understood that unless otherwise specified, "/" in the descriptions of this application represents an "or" relationship between associated objects. For example, A/B may indicate A or B. A and B may be singular or plural. In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions and purposes. Persons skilled in the art may understand that the terms such as "first" and "second" do not limit a quantity or an execution sequence, and the terms such as "first" and "second" do not indicate a definite difference. In addition, in embodiments of this application, the word like "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner for ease of understanding.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a digital versatile disc (
digital versatile disc, DVD)), a semiconductor medium (for example, a solid-state drive (solid state disk, SSD)), or the like.

Although this application is described with reference to embodiments, in a process of implementing this application that claims protection, persons skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of multiple. A single processor or another module may implement several functions enumerated in the claims. Some measures are recorded in dependent claims that are different from each other, but this does not mean that these measures cannot be combined to produce a good effect.

**It** may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the descriptions of embodiments have respective focuses. For a part that is not described in detail in an embodiment, refer to related descriptions of another embodiment.

The components in the apparatuses in embodiments of this application may be combined, divided, and deleted based on an actual need. Persons skilled in the art may combine different embodiments and features of the different embodiments described in this specification.

The foregoing embodiments are merely intended for describing the technical solutions of this application, rather than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the scope of the technical solutions of embodiments of this application.

## Claims

1. A network management method, wherein the method comprises:
receiving first request information, wherein the first request information is used to request whether to perform a management operation on a first subordinate closed-loop control process set of a closed-loop control process in addition to performing the management operation on the closed-loop control process, and the closed-loop control process is used to manage a network entity or a network service; and
performing the management operation based on the first request information.

2. The method according to claim 1, wherein the management operation is a pause operation, a stop operation, a resume operation, or an operation of obtaining pause point information.

3. The method according to claim 1 or 2, wherein
when the first request information is used to request to perform the management operation on the first subordinate closed-loop control process set in addition to performing the management operation on the closed-loop control process, performing the management operation based on the first request information comprises: performing the management operation on the closed-loop control process, and triggering the management operation to be performed on the first subordinate closed-loop control process set; or
when the first request information is used to request not to perform the management operation on the first subordinate closed-loop control process set except for performing the management operation on the closed-loop control process, performing the management operation based on the first request information comprises: performing the management operation on the closed-loop control process, but skipping triggering the management operation to be performed on the first subordinate closed-loop control process set.

4. The method according to claim 3, wherein when the first request information is used to request to perform the management operation on the first subordinate closed-loop control process set in addition to performing the management operation on the closed-loop control process, the first request information comprises range information, and the range information is used to determine the first subordinate closed-loop control process set.

5. The method according to claim 4, wherein
the range information comprises an identifier of a subordinate closed-loop control process that is of the closed-loop control process and on which the management operation is to be performed;
the range information comprises a level of a subordinate closed-loop control process that is of the closed-loop control process and on which the management operation is to be performed;
the range information comprises a network domain comprising a subordinate closed-loop control process that is of the closed-loop control process and on which the management operation is to be performed; or
the range information indicates all subordinate closed-loop control processes of the closed-loop control process.

6. The method according to claim 2, wherein when the management operation is any one of the pause operation, the stop operation, or the resume operation,
when the first request information is used to request to perform the management operation on the first subordinate closed-loop control process set in addition to performing the management operation on the closed-loop control process, the first request information further comprises pause points in the closed-loop control process and at least one subordinate closed-loop control process in the first subordinate closed-loop control process set; or
when the first request information is used to request not to perform the management operation on the first subordinate closed-loop control process set except for performing the management operation on the closed-loop control process, the first request information further comprises a pause point in the closed-loop control process.

7. The method according to claim 6, wherein before receiving the first request information, the method further comprises:
receiving third request information, wherein the third request information is used to request to obtain the pause point information.

8. The method according to any one of claims 3 to 7, wherein
the first subordinate closed-loop control process set comprises a second subordinate closed-loop control process set directly managed by a first network management service provider entity, and triggering the management operation to be performed on the first subordinate closed-loop control process set comprises: performing, by the first network management service provider entity, the management operation on the second subordinate closed-loop control process set;
or
the first subordinate closed-loop control process set comprises a third subordinate closed-loop control process set directly managed by a second network management service provider entity, and triggering the management operation to be performed on the subordinate closed-loop control process of the closed-loop control process comprises: sending second request information to the second network management service provider entity, wherein the second request information is used to request the second network management service provider entity to perform the management operation on the third subordinate closed-loop control process set.

9. The method according to claim 8, wherein the method further comprises:
obtaining or receiving an execution result of the management operation.

10. The method according to any one of claims 1 to 9, wherein the method further comprises:
outputting or sending the execution result of the management operation.

11. A network management method, wherein the method comprises:
sending first request information, wherein the first request information is used to request whether to perform a management operation on a first subordinate closed-loop control process set of a closed-loop control process in addition to performing the management operation on the closed-loop control process, and the closed-loop control process is used to manage a network entity or a network service; and
receiving an execution result of the management operation.

12. The method according to claim 11, wherein the management operation is a pause operation, a stop operation, a resume operation, or an operation of obtaining pause point information.

13. The method according to claim 11 or 12, wherein
the first request information is used to request to perform the management operation on the first subordinate closed-loop control process set in addition to performing the management operation on the closed-loop control process; or
the first request information is used to request not to perform the management operation on the first subordinate closed-loop control process set except for performing the management operation on the closed-loop control process.

14. The method according to any one of claims 11 to 13, wherein the first request information comprises range information, and the range information is used to determine the first subordinate closed-loop control process set.

15. The method according to claim 14, wherein
the range information comprises an identifier of a subordinate closed-loop control process that is of the closed-loop control process and on which the management operation is to be performed;
the range information comprises a level of a subordinate closed-loop control process that is of the closed-loop control process and on which the management operation is to be performed;
the range information comprises a network domain comprising a subordinate closed-loop control process that is of the closed-loop control process and on which the management operation is to be performed; or
the range information indicates all subordinate closed-loop control processes of the closed-loop control process.

16. The method according to claim 12, wherein when the management operation is any one of the pause operation, the stop operation, or the resume operation,
when the first request information is used to request to perform the management operation on the first subordinate closed-loop control process set in addition to performing the management operation on the closed-loop control process, the first request information further comprises pause points in the closed-loop control process and at least one subordinate closed-loop control process in the first subordinate closed-loop control process set; or
when the first request information is used to request not to perform the management operation on the first subordinate closed-loop control process set except for performing the management operation on the closed-loop control process, the first request information further comprises a pause point in the closed-loop control process.

17. The method according to claim 16, wherein before sending the first request information, the method further comprises:
sending third request information, wherein the third request information is used to request to obtain the pause point information.

18. A network management method, wherein the method comprises:
sending, by a network management service consumer entity, first request information, wherein the first request information is used to request whether to perform a management operation on a first subordinate closed-loop control process set of a closed-loop control process in addition to performing the management operation on the closed-loop control process, and the closed-loop control process is used to manage a network entity or a network service;
receiving, by a first network management service provider entity, the first request information;
and
performing, by the first network management service provider entity, the management operation based on the first request information.

19. The method according to claim 18, wherein the management operation is a pause operation, a stop operation, a resume operation, or an operation of obtaining pause point information.

20. The method according to claim 18 or 19, wherein when the first request information is used to request to perform the management operation on the first subordinate closed-loop control process set in addition to performing the management operation on the closed-loop control process, performing, by the first network management service provider entity, the management operation based on the first request information comprises: performing, by the first network management service provider entity, the management operation on the closed-loop control process, and triggering the management operation to be performed on the first subordinate closed-loop control process set; or
when the first request information is used to request not to perform the management operation on the first subordinate closed-loop control process set except for performing the management operation on the closed-loop control process, performing, by the first network management service provider entity, the management operation based on the first request information comprises: performing, by the first network management service provider entity, the management operation on the closed-loop control process, but skipping triggering the management operation to be performed on the first subordinate closed-loop control process set.

21. The method according to claim 20, wherein when the first request information is used to request to perform the management operation on the first subordinate closed-loop control process set in addition to performing the management operation on the closed-loop control process, the first request information comprises range information, and the range information is used to determine the first subordinate closed-loop control process set.

22. The method according to claim 21, wherein
the range information comprises an identifier of a subordinate closed-loop control process that is of the closed-loop control process and on which the management operation is to be performed;
the range information comprises a level of a subordinate closed-loop control process that is of the closed-loop control process and on which the management operation is to be performed;
the range information comprises a network domain comprising a subordinate closed-loop control process that is of the closed-loop control process and on which the management operation is to be performed; or
the range information indicates all subordinate closed-loop control processes of the closed-loop control process.

23. The method according to claim 22, wherein when the management operation is any one of the pause operation, the stop operation, or the resume operation,
when the first request information is used to request to perform the management operation on the first subordinate closed-loop control process set in addition to performing the management operation on the closed-loop control process, the first request information further comprises pause points in the closed-loop control process and at least one subordinate closed-loop control process in the first subordinate closed-loop control process set; or
when the first request information is used to request not to perform the management operation on the first subordinate closed-loop control process set except for performing the management operation on the closed-loop control process, the first request information further comprises a pause point in the closed-loop control process.

24. The method according to claim 23, wherein before sending, by the network management service consumer entity, the first request information, the method further comprises:
sending, by the network management service consumer entity, third request information, wherein the third request information is used to request to obtain the pause point information; and
receiving, by the first network management service provider entity, the third request information.

25. The method according to any one of claims 22 to 24, wherein
the first subordinate closed-loop control process set comprises a second subordinate closed-loop control process set directly managed by the first network management service provider entity, and triggering the management operation to be performed on the first subordinate closed-loop control process set comprises: performing, by the first network management service provider entity, the management operation on the second subordinate closed-loop control process set;
or
the first subordinate closed-loop control process set comprises a third subordinate closed-loop control process set directly managed by a second network management service provider entity, and triggering the management operation to be performed on the subordinate closed-loop control process of the closed-loop control process comprises: sending, by the first network management service provider entity, second request information to the second network management service provider entity, wherein the second request information is used to request the second network management service provider entity to perform the management operation on the third subordinate closed-loop control process set.

26. The method according to claim 25, wherein the method further comprises:
obtaining or receiving, by the first network management service provider entity, an execution result of the management operation.

27. The method according to any one of claims 18 to 26, wherein the method further comprises:
outputting or sending, by the first network management service provider entity, the execution result of the management operation; and
receiving, by the network management service consumer entity, the execution result of the management operation.

28. A network management apparatus, wherein the apparatus comprises a module configured to implement the method according to any one of claims 1 to 10, or comprises a module configured to implement the method according to any one of claims 11 to 17.

29. A network management apparatus, comprising a processor, a memory, and instructions that are stored in the memory and that are run on the processor, wherein when the instructions are run, the network management apparatus is caused to perform the method according to any one of claims 1 to 10, or perform the method according to any one of claims 11 to 17.

30. A network management system, comprising a first network management apparatus and a second network management apparatus, wherein the first network management apparatus comprises a module configured to perform the method according to any one of claims 1 to 10, and the second network management apparatus comprises a module configured to implement the method according to any one of claims 11 to 17.

31. A computer-readable storage medium, wherein the computer-readable storage medium comprises instructions, and when the instructions are run by a processor, the method according to any one of claims 1 to 17 is implemented.
